Europäisches Patentamt

European Patent Office

Office européen des brevets

(19)

(11) Veröffentlichungsnummer : **0 098 971**
**B1**

(12)                    **EUROPÄISCHE PATENTSCHRIFT**

(45) Veröffentlichungstag der Patentschrift :
30.12.86

(51) Int. Cl.⁴ : **D 21 H   1/04**, B 32 B  29/00

(21) Anmeldenummer : 83105606.4

(22) Anmeldetag : 08.06.83

(54) **Strukturtapete mit reliefartiger Sichtfläche.**

(30) Priorität : 15.07.82 DE 3226473

(43) Veröffentlichungstag der Anmeldung :
25.01.84 Patentblatt 84/04

(45) Bekanntmachung des Hinweises auf die Patenterteilung : 30.12.86 Patentblatt 86/52

(84) Benannte Vertragsstaaten :
AT BE CH DE FR GB IT LI LU NL SE

(56) Entgegenhaltungen :
CH-A-   240 949
DE-A- 1 511 069
DE-A- 1 635 595
DE-A- 1 635 602
DE-A- 2 555 886
GB-A- 1 254 832

(73) Patentinhaber : Fuchs, Hans
Deweerthstrasse 98
D-5600 Wuppertal 1 (DE)

(72) Erfinder : Fuchs, Hans
Deweerthstrasse 98
D-5600 Wuppertal 1 (DE)

(74) Vertreter : Peerbooms, Rudolf, Dipl.-Phys.
Postfach 200 208 Dickmannstrasse 45C
D-5600 Wuppertal 2 (DE)

## Beschreibung

Die Erfindung betrifft eine Strukturtapete mit überstreichbarer, reliefartiger Sichtfläche, welche aus einer mit einer beidseitigen Prägung versehenen Prägetapete aus Papier und einer an die Rückseite der Prägetapete angeklebten Trägertapete aus glattem Papier, z. B. Makulaturpapier, besteht, wobei die Trägertapete nur, aber an alle rückwärtig hochgeprägten Stegflächen der Prägetapete angeklebt ist.

Strukturtapeten mit reliefartiger Sichtfläche sind als Prägetapeten oder als Kunststofftapeten bekannt, wobei im letzten Fall meist die Erhebungen aufgeschäumt sind. Bei einlagigen Prägetapeten, insbesondere bei Prägetapeten aus Papier, ist das Tapezieren aber sehr kritisch, da nach dem Auftragen des Tapetenkleisters die Prägetapete größenmäßig zunimmt, die Prägetiefe erheblich abnimmt und die Tapetenbahn sich in der Fläche mehr oder weniger verzieht. Rapportabhängige Prägetapeten können kaum mit befriedigender Paßgenauigkeit geklebt werden. Prägetapeten aus Papier sind deshalb zunehmend von Kunststofftapeten verdrängt worden, welche jedoch nicht die Behaglichkeit von Papiertapeten besitzen, bei Brand gefährliche Rauchgase entwickeln und als Abfall oder Alttapete nicht verbrannt werden dürfen, sondern auf Deponien gebracht werden müssen.

Durch die DE-A-16 35 595 ist eine aus einer Prägetapete aus Karton und einer Trägertapete aus Papier zweilagig aufgebaute Tapete bekannt, bei der die Trägertapete den Verlust der Prägung beim Tapezieren verhindern soll. Bei dieser bekannten Tapete wird zunächst die Prägetapete an ihrer Rückseite mit einer durchgehenden, flächigen Leimschicht bestrichen, auf die dann die Trägertapete aufgedrückt wird. Die Prägetapete erfährt aber schon beim Herstellvorgang eine gewisse Einweichung, durch die die Feinstrukturen der Prägung verloren gehen. Darüber hinaus verliert eine solche Tapete, falls zum Kaschieren ein wasserlöslicher Leim verwendet worden ist, bei einem späteren Einkleistern und Einweichen ihre Formbeständigkeit. Wird dagegen ein wasserunlöslicher Klebstoff verwendet, verliert die Tapete ihre Luft- und Feuchtigkeitsdurchlässigkeit. Dieser Verlust an Atmungsaktivität führt zu Schwierigkeiten bei der Anbringung der Tapete.

Durch die EP-A-00 34 791 ist ferner eine aus zwei Papierlagen herstellbare, dreidimensionale Strukturtapete bekannt, bei der gemäß einer Ausführungsform eine durchgehende Kaschier-Kleberschicht ganzflächig auf der Trägerbahn vorgesehen ist. Eine ganzflächige Kleberschicht auf der Trägerbahn jedoch hat zur Folge, daß die Trägerbahn in ihrer ganzen Fläche ihre natürliche Fähigkeit verliert, Feuchtigkeit beim Einkleistern unter Quellung aufzunehmen und beim Trocknen unter Schrumpfung wieder abzugeben, was zu Problemen hinsichtlich einer paßgenauen Anbringung der Tapete führen kann, da die normale Feuchtigkeitsdehnung der Tapete nicht verhindert wird. Darüber hinaus wird hierbei die Atmungsaktivität der Tapete stark beeinträchtigt.

Bei anderen Ausführungsformen dieser Druckschrift sind Präge- und Trägertapete nur punktweise miteinander verklebt, wobei das Punktmuster willkürlich gewählt ist. Nur willkürlich punktweise oder nur längs paralleler Linien (DE-A-16 35 602) zusammengeleimte, doppellagige Tapeten können aber durch aufgetragenen Kleister so stark aufgeweicht werden, daß sie ihre Formbeständigkeit verlieren, so daß ihr passungsgenaues Anbringen wiederum sehr schwierig wird.

Der Erfindung liegt die Aufgabe zugrunde, eine mit großer Paßgenauigkeit anbringbare, zugleich aber noch geschneidige und auch auf Dauer haltbar anklebbare, überstreichbare Strukturtapete aus Papier zu schaffen, bei welcher die Prägetiefe durch den Tapeziervorgang nicht verloren wird, da die Prägetiefe, so wie das genaue Passen der Prägemuster die wichtigsten Merkmale solcher Tapeten sind, weil sie im Normalfall keine farblichen, aufgedruckten Muster besitzen, was nicht heißen soll, daß sie solche nicht besitzen können.

Zu diesem Zweck ist erfindungsgemäß vorgesehen, daß die Trägertapete an die zuvor mit einem wasserunlöslichen Klebstoff versehenen Stegflächen der Prägetapete aufgedrückt ist und daß alle anderen Bereiche der Prägetapete und der Trägertapete vollständig frei von Klebstoff sind.

Die Erfindung bringt eine Reihe von wesentlichen Vorteilen. Zum einen ist die Herstellung einer solchen zweilagigen Papierprägetapete verhältnismäßig einfach, da als zusätzliche Maßnahmen bei der Herstellung üblicher Prägetapeten aus Papier lediglich das Auftragen des Klebstoffes auf die rückwärtigen, hochstehenden Prägestege und anschließend das Aufkaschieren der Trägerbahn vorzunehmen sind. Die Trägertapete fixiert hierbei sofort die Prägestruktur der Prägetapete und bildet zusammen mit der Trägertapete zwangsläufig Luftspalte, welche die Wärmeisolation der Tapete erhöhen.

Da später nur die Trägertapete durch den Tapetenkleister eingeweicht wird und als Trägertapete vorzugsweise Makulatur verwendet werden kann, ist die Tapete nach relativ kurzer Einweichzeit anklebbar. Es kann aber auch andrerseits verhältnismäßig lange mit dem Ankleben der Papierprägetapete gewartet werden, da die Verklebungsstellen eine Wassersperre darstellen, so daß die vordere Prägetapete nicht oder kaum Feuchtigkeit aufnimmt und somit die Festigkeit und Formbeständigkeit der Tapete auch bei eingeweichter Trägertapete über längere Zeiträume hinweg garantiert ist, auch wenn die Einweichung über die Fläche hinweg unterschiedlich stark sein sollte.

Beim Einweichen im eingekleisterten Zustand quillt und arbeitet nur die Trägertapete, wobei aber nunmehr ihre zwangsläufige Größenzunahme lediglich zu einem Einbeulen der Trägertapete in die Luftspalte zwischen den beiden Tapetenlagen führt, weil an diesen Stellen die Trägertapete frei von wasserunlöslichem und wasserundurchlässigem Klebstoff ist, und sie daher dort die Feuchtigkeit des Kleisters in üblicher Weise aufnimmt. Die Verklebung nur im Bereich der Stege gewährleistet zudem eine hohe Atmungsaktivität der Tapete.

In vielen Fällen erspart die aufkaschierte Trägertapete das sonst übliche Vorkleben von Makulatur.

Der wesentlichste Vorteil liegt jedoch darin, daß die nach dieser Erfindung hergestellte Prägetapete mit sehr großer Paßgenauigkeit auch bei schwierigen Mustern und auch von Nichtfachleuten tapeziert werden kann. Die Prägetiefe der Prägetapete bleibt weitgehend erhalten, wodurch ein noch öfteres Überrollen oder Überstreichen der Papierprägetapete mit Farbe als bisher möglich ist. Die beiden Hauptforderungen an überstreichbare Prägetapeten, nämlich eine deutliche Prägetiefe und eine passungsgenaue Anbringbarkeit, sind bei der Erfindung optimal erfüllt.

Das Tapezieren der Prägetapete nach der Erfindung wirft keine Probleme mehr auf. Um die Prägung zu schonen, braucht weder mit einer extrem weichen Andruckrolle gearbeitet zu werden, noch müssen im Hinblick auf eine Paßgenauigkeit exakt gleiche Einweichzeiten eingehalten werden.

Die Erfindung ermöglicht die Rückkehr zur umweltfreundlichen reinen, überstreichbaren Papierstrukturtapete mit ihrem hohen Behaglichkeitseffekt.

Gemäß einer weiteren Ausführungsform der Erfindung kann vorgesehen werden, daß die Prägetapete, bedingt durch ihr Prägemuster, mit solchen Stegflächen versehen ist, die ein zusammenhängendes ebenes Gitter bilden, welches mit dem aufgebrachten Klebstoff und mit den an die Stegflächen unmittelbar angeklebten gitterförmigen Bereichen der Trägertapete zu einem gegenüber Wasserangriffen formbeständigen Armierungsnetz vereinigt ist. Bei einer solchen Ausführungsform wird die Formbeständigkeit nicht nur durch die beim Einkleistern trocken bleibende Prägetapete sondern zusätzlich durch das zusammenhängende Verklebungsnetz gewährleistet.

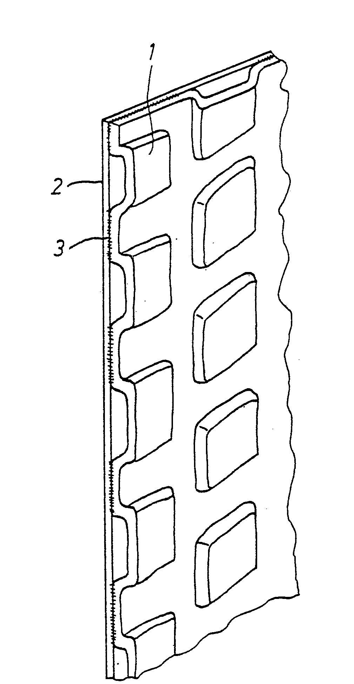

Die Papierprägetapete nach der Erfindung wird im folgenden anhand der beiliegenden Zeichnung näher erläutert :

Die Papierprägetapete ist zweilagig und besteht aus einer vorderen Prägetapete 1 aus Papier, worunter auch Karton verstanden wird, und einer rückwärtigen Trägertapete 2 aus beispielsweise Makulaturpapier. Die Prägetapete ist mit einer beidseitig, den gesamten Materialquerschnitt erfassenden Prägung versehen und quasi tiefgezogen. Die Trägertapete 2 ist glattflächig. Sie ist nur an alle rückwärtig hochgeprägten Stegflächen 3 der Prägetapete 1 angeklebt, wobei ein wasserunlöslicher Klebstoff verwendet ist, welcher die Stegflächen 3 und die Berührungsflächen der Trägertapete 2 zugleich wasserundurchlässig macht. Beim Auftragen des Tapezierkleisters auf die Trägertapete 2 bleibt somit die vordere Prägetapete 1 trocken und formstabil. In den Bereichen zwischen den Prägestegen 3 nimmt dagegen die Trägertapete 2 beim Einkleistern in üblicher Weise Feuchtigkeit auf, was der Trägertapete 2 die Möglichkeit gibt, in üblicher Weise in Längs- und Querrichtung an Größe zuzunehmen, ohne daß hiervon die Prägetapete 1 betroffen wird und ohne daß Spannungen zwischen der Prägetapete 1 und der Trägertapete 2 entstehen, da sämtliche Dehnungen nur zu einem Einbeulen der Trägertapete in die Luftspalte, d. h. in die Prägevertiefungen der Prägetapete 1 führen.

Die rückwärtigen Stegflächen 3 der Prägetapete 1 bilden bei der gezeigten Papierpräge-Relieftapete ein in Quer- und Längsrichtung zusammenhängendes ebenes Gitter, das zusammen mit dem aufgetragenen Klebstoff und mit dem unmittelbar angeklebten, gitterförmigen Bereich der Trägertapete 2 ein Armierungsnetz bildet, das gegenüber Wasserangriffen formbeständig ist und infolgedessen eine paßgenaue Anklebbarkeit der Tapete in erhöhtem Maße gewährleistet.

## Patentansprüche

1. Strukturtapete mit überstreichbarer, reliefartiger Sichtfläche, bestehend aus einer mit einer beidseitigen Prägung versehenen Prägetapete (1) aus Papier und einer an der Rückseite der Prägetapete (1) angeklebten Trägertapete (2) aus glattem Papier, z. B. Makulaturpapier, wobei die Trägertapete (2) nur, aber an alle rückwärtig hochgeprägten Stegflächen (3) der Prägetapete (1) angeklebt ist, dadurch gekennzeichnet, daß die Trägertapete (2) an die zuvor mit einem wasserunlöslichen Klebstoff versehenen Stegflächen (3) der Prägetapete (1) aufgedrückt ist und daß alle anderen Bereiche der Prägetapete (1) und der Trägertapete (2) vollständig frei von Klebstoff sind.

2. Strukturtapete nach Anspruch 1, dadurch gekennzeichnet, daß die Prägetapete (1) mit rückwärtigen Stegflächen (3) versehen ist, die ein zusammenhängendes, ebenes Gitter bilden, welches mit dem aufgebrachten Klebstoff und mit den an die Stegflächen (3) unmittelbar angeklebten gitterförmigen Bereichen der Trägertapete (2) zu einem gegenüber Wasserangriffen formbeständigen Armierungsnetz vereinigt ist.

## Claims

1. Structural wallpaper with a visible surface which is relief-like and may be painted over, consisting of an embossed wallpaper (1), provided with an embossing on both sides, and made of paper and of a carrier wallpaper (2) glued to the reverse side of the embossed wallpaper (1) and made of a smooth paper, for example, waste paper, whereby the carrier wallpaper (2) is glued only, but to all root surfaces (3) of the embossed wall paper which are highly embossed on the reverse side, characterised in that the carrier wallpaper (2) is pressed on against the root surfaces (3), first provided with a water insoluble adhesive substance, of the embossed wallpaper (1) and in that all other areas of the embossed wallpaper (1) and of the carrier wallpaper (2) are completely free of adhesive substance.

2. Structural wallpaper as in claims, characterised in that the embossed wallpaper (1) is provided with root surfaces (3) on the reverse side, which form a connected flat grid, which with the grid-like areas of the carrier wallpaper (2), glued directly to the root surfaces (3), is united into a reinforcing net, dimensionally stable against assault by water.

**Revendications**

1. Tenture structurée, à surface apparente, susceptible d'être enduite, présentant du relief, constituée d'une tenture gaufrée (1) en papier, munie de gaufrage sur les deux faces et d'une tenture-support (2) en papier lisse, par exemple en papier maculature, collée sur la face arrière de la tenture gaufrée (1), la tenture-support (2) n'étant collée que sur toutes les surfaces d'âme (3) arrière fortement gaufrées, de la tenture gaufrée (1), caractérisée par le fait que la tenture-support (2) est appliquée en pressant sur les surfaces d'âme (3) de la tenture gaufrée (1) munies au préalable d'une colle insoluble à l'eau et toutes les autres zones de la tenture gaufrée (1) et de la tenture-support (2) sont totalement dépourvues de colle.

2. Tenture structurée selon la revendication 1, caractérisée par le fait que la tenture gaufrée (1) est munie de surfaces d'âme arrière (3) formant un quadrillage plan continu, qui s'associe avec la colle appliquée et avec les zones de la tenture-support (2) en forme de quadrillage collées directement sur les surfaces d'âme (3) pour former un réseau d'armature indéformable sous les attaques de l'eau.